# EUROPEAN PATENT APPLICATION

(11) **EP 1 024 482 A1**
(43) Date of publication of application: **02.08.2000**
(21) Application number: 00300682.2
(22) Date of filing: 28.01.2000
(51) Int. Cl.: G11B 7/09, G11B 7/22

(54) **Actuator base for optical pickup and method for manufacturing the same**

(30) Priority: 28.01.1999 JP 1980699
(71) Applicant: Mitsumi Electric Co., Ltd., Chofu-shi, Tokyo (JP)
(72) Inventor: Hori, Ken'ichi, Chofu-shi, Tokyo (JP)
(74) Representative: Moir, Michael Christopher

(57) **Abstract**

An actuator base comprises an elongated rectangular frame portion (31). In the actuator base, a pair of yoke portions (32) are formed to exit between longitudinal sides (31-1) of the frame portion (31) opposing each other. The forming of the actuator base is performed by punching the frame portion and the pair of yoke portions unitarily from one metallic plate. The punching is performed based on a development in which the pair of yoke portions are distant from each other in advance.

## Description

### BACKGROUND OF THE INVENTION

The present invention relates to an optical pickup for recording/reproducing information in an optical recording medium such as an optical disc, and in particular relates to a manufacturing method of an actuator base for the optical pickup.

As is well-known various peripheral devices are connected to electronic apparatuses such as personal computers. A storage device (recording medium) is one of the peripheral devices. The storage device (recording medium) has various kinds, and a CD-R (compact disc recordable) device is one of them. The CD-R device is able to be additionally written upon and has compatibility with a CD-ROM or an audio CD (CD-DA). In order to write information in the CD-R device, an exclusive writing device and application for writing are needed while a general CD-ROM driver can be used for reading information from the CD-R device. Although the information written into the CD-R device cannot be erased, additional information can be repeatedly written therein.

In order to write information in such the CD-R device and read information therefrom, a recording/reproducing optical pickup for irradiating the CD-R device with a laser beam is needed.

Generally, such optical pickup comprises a laser beam source for emitting a laser beam and an optical system for leading the emitted laser beam to a recording medium such as an optical disc. As described above, in the CD-R device, information can be not only read therefrom but also can be written thereinto. In the optical disc for the CD-R device, the power level of a laser beam emitted from the laser beam source is required for switching between levels in reading information and in writing it. The reason is that information writing is performed by forming pits on a recording layer of the optical disc by radiation with the laser beam. The power level of the laser beam emitted from the laser beam source during writing information is larger than that during reading it. For example, the power level during writing information is roughly 10 to 20 times larger than that during reading it.

As will be described in detail later, the optical pickup comprises an optical base, a lens holder, a damper base, and an actuator base. The lens holder includes an objective lens, a tracking coil, and a focusing coil. The actuator base is used for accommodating the lens holder and the damper base. The actuator base is formed of a metallic plate of a magnetic material. This is because function as yoke is demanded from part of the actuator base. The part of the actuator base functioning as the yoke is required to have a predetermined thickness. However it is difficult to satisfy the above-mentioned requirement with a conventional actuator base which is unitarily formed from one metallic plate by punching.

### SUMMARY OF THE INVENTION

Accordingly, it is an object of the preferred embodiment of the present invention to provide a method for manufacturing an actuator base which can be unitarily punched without reduction in the thickness of a yoke portion thereof.

An optical pickup applicable to the present invention comprises a lens holder holding an objective lens for the optical pickup, a damper base for supporting the lens holder movably in vertical and horizontal directions via plural pieces of suspension wire, and an actuator base having a supporting block for fixing the damper base. The actuator base is formed of a magnetic and metallic material and comprises an inverted U-shaped pair of yoke portions for holding permanent magnets at positions corresponding to both sides of the lens holder.

In accordance with an aspect of the present invention, a method for manufacturing an actuator base comprises the steps of having an elongated rectangular frame portion in the actuator base, forming the pair of yoke portions so as to exit between longitudinal sides of a frame portion opposing each other in the frame portion, and punching the frame portion and the pair of yoke portions unitarily from a metallic plate, wherein the step of punching the frame portion and the pair of yoke portions are performed based on a development in which the pair of yoke portions are distant from each other in advance.

Another aspect of the invention is a metallic plate punched to form unitarily a frame portion and a pair of yoke portions of an optical base for an optical pickup. The metallic plate after punching and before bending into usable form has two parallel frame segments connected by a connecting segment. A yoke segment extends from each frame segment in a direction generally normal to the respective frame segment, and the two yoke segments extend in opposite directions from each other. Each yoke segment has an arm extending generally normal to the frame segments, and each arm has a pair of flaps, each flap extending from an opposite side of the arm. The metallic plate is configured by the punching such that when the metallic plate is bent into usable form, with a portion of the arms of the two yoke segments being brought into a coplanar relation, the distance between the arms of the two yoke segments is less than the aggregate length of their adjacent respective flaps. Portions of the plate forming the two yoke segments preferably have the same thickness. In this aspect, the method for manufacturing the actuator base for an optical pickup comprises the steps of punching the metallic plate, and punching the metallic plate into the usable form.

### BRIEF DESCRIPTION OF THE DRAWINGS

Fig. 1 is a plan view showing the structure of a conventional optical pickup.
Fig. 2 is a sectional view of the conventional actuator base shown in Fig. 1.
Fig. 3 is a plan view showing a punched piece portion obtained by punching for manufacturing the conventional actuator base shown in Fig. 1.
Fig. 4 is a sectional view for illustrating a modified example of the actuator base shown in Fig. 2.
Fig. 5 is a development of an actuator base for use as a manufacturing method according to the present invention.
Fig. 6 is a plan view of the actuator base obtained by bending the punched piece made by the punching based on the development shown in Fig. 5.
Fig. 7 is a side view of the actuator base shown in Fig. 6.

### DESCRIPTION OF THE PREFERRED EMBODIMENT

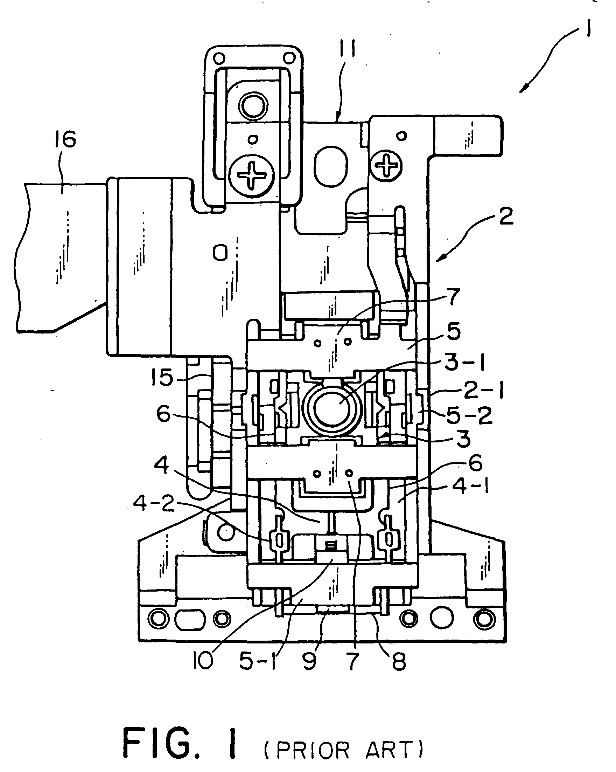

In order to facilitate understanding of the present invention, a conventional optical pickup for use as an optical disc recording/reproducing device such as a CD-R device will be described with reference to Fig. 1.

The optical pickup 1 comprises an optical base 2, a lens holder 3, a damper base 4, and an actuator base 5. The lens holder 3 comprises an objective lens 3-1, a tracking coil (not shown), and a focusing coil (not shown). The actuator base 5 is used for accommodating the lens holder 3 and the damper base 4.

The optical pickup 1 also comprises a laser unit 11 as a laser-beam source for emitting a laser beam. The surface of the optical disc (CD-R) is irradiated with the laser beam emitted from the laser unit 11 through a diffraction grating, a beam splitter, a collimating lens, and the objective lens 3-1. The optical disc is an optical storage medium. The laser beam reflected from the optical disc is launched into a photodiode (PD) through the objective lens 3-1, the collimating lens, and the beam splitter. The photodiode is a light-receiving device for receiving the laser beam reflected from the optical disc.

The laser unit 11 and an optical system such as the beam splitter are held by the optical base 2. In addition, the optical base 2 is fixed to a casing (not shown) of an optical disc drive. A circuit board 15 is fixed to one side of the optical base 2. The circuit board 15 is electrically connected to other circuit elements (not shown) of the optical disc drive by flexible cables 16 connected thereto.

The lens holder 3 is connected to the damper base 4 via plural pieces of suspension wire 6. The assembly of these parts is accommodated in the actuator base 5. A portion of the actuator base 5 is a yoke 7. A permanent magnet ( to be described later) is combined with the yoke 7.

The actuator base 5 is of an elongated-rectangular frame-shaped structure formed of a metallic and magnetic material. One side of the frame-shaped structure has a receiving portion (not shown) for the damper base 4. This receiving portion has a supporting block 5-1 for fixing the damper base 4. The supporting block 5-1 is unitarily formed with the actuator base 5. Approximately semi-circular protrusions 5-2 are respectively formed on both longitudinal side-walls of the frame-shaped structure. The protrusions 5-2 are supported by supporting portions 2-1 disposed in the optical base 2.

A damper base cover 4-1 formed of a transparent resin material is fixed to the damper base 4. In the rear portion of the damper base cover 4-1, fixing portions 4-2 each for fixing one end of pieces of the suspension wire 6 are disposed. A space between the damper base 4 and the damper base cover 4-1 is filled with a vibration-damping material (not shown) for damping the vibration of the suspension wires 6.

On the rear wall of the damper base 4, a flexible wiring board 8 for connecting to end portions of the suspension wire 6 by soldering is disposed. The damper base 4 is fixed in an inserted state into a space between both side-walls of the actuator base 5 and the supporting block 5-1.

The damper base 4 is secured by a screw (or a bolt) 9 and a nut 10 so as to pinch the supporting block 5-1 and a portion of the damper base 4. The damper base 4 is rotatable about the screw 9. This is for the purpose of skewing adjustment.

Before the damper base 4 is fixed to the actuator base 5, the suspension wires 6 are secured to the damper base 4. That is, the lens holder 3 and the damper base 4 are accommodated in the actuator base 5 to be fixed thereto in a state of an assembly connected by the suspension wires 6.

Such an optical pickup is disclosed in Japanese Patent Application No. 10-337509, for example.

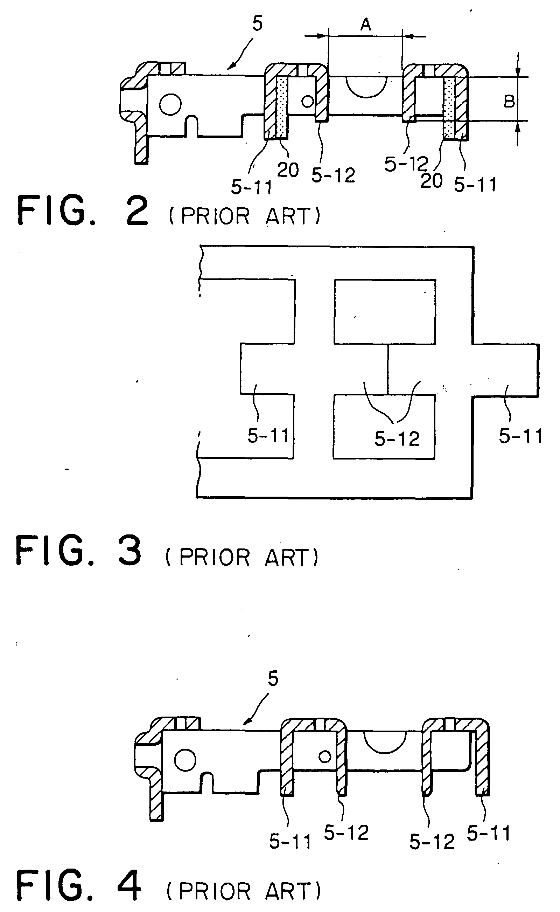

The actuator base 5 of the optical pickup shown in Fig. 1 is in a shape shown in Figs. 2 and 3. The actuator base 5 shown in Figs. 1 to 3 is used for driving the lens holder 3. The lens holder 3 has the objective lens 3-1 and is coiled by the tracking coil and the focusing coil as well. Accordingly, permanent magnets 20 are assembled on both sides of the actuator base 5 in the longitudinal direction with the lens holder 3 in between, respectively.

Two inverted U-shaped portions are formed in the actuator base 5 so as to be disposed between both of the longitudinal side-walls thereof. Each permanent magnet 20 is assembled to an inverted U-shaped portion. The two permanent magnets 20 form two magnetic circuits with the actuator base 5. The inverted U-shaped portion has two plate portions extending downwardly. In the two plate portions, one disposed farther from the lens holder 3 is called a back yoke 5-11 while the other disposed closer to the lens holder 3 is called an opposing yoke 5-12. A function of such magnetic circuit is also disclosed in Japanese Unexamined Patent Publication No. 10-334485, for example.

Incidentally, in the above-mentioned actuator base 5, a sufficient thickness is needed so that magnetic flux cannot leak from the inverted U-shaped portion. However, the objective lens 3-1 and the lens holder 3 are preferably as small as possible so as to obtain a high-degree of acceleration during driving of the lens holder 3. Therefore, it is necessary to reduce the distance between the opposing yokes 5-12 of the two magnetic circuits. If we set the sum of respective lengths of two opposing yokes 5-12 to be "2B", the sum of lengths "2B" becomes longer than the distance "A" between the two opposing yokes 5-12 shown in Fig. 2. This means that the actuator base 5 cannot be manufactured by press punching of one steel plate as shown in Fig. 3.

As a method for solving this problem it has been considered to make the shorter opposing yoke 5-12 longer and thinner, as shown in Fig.4. However, since the thickness of the opposing yoke 5-12 is reduced in this method, magnetic flux leakage occurs, so that a sufficient degree of acceleration cannot be obtained.

As another method, the following is considered. Both magnetic circuits are made as separate parts and thereafter fixed together.

However, this method has a disadvantage that the number of processes and parts increases compared with unitary and one-shot manufacturing.

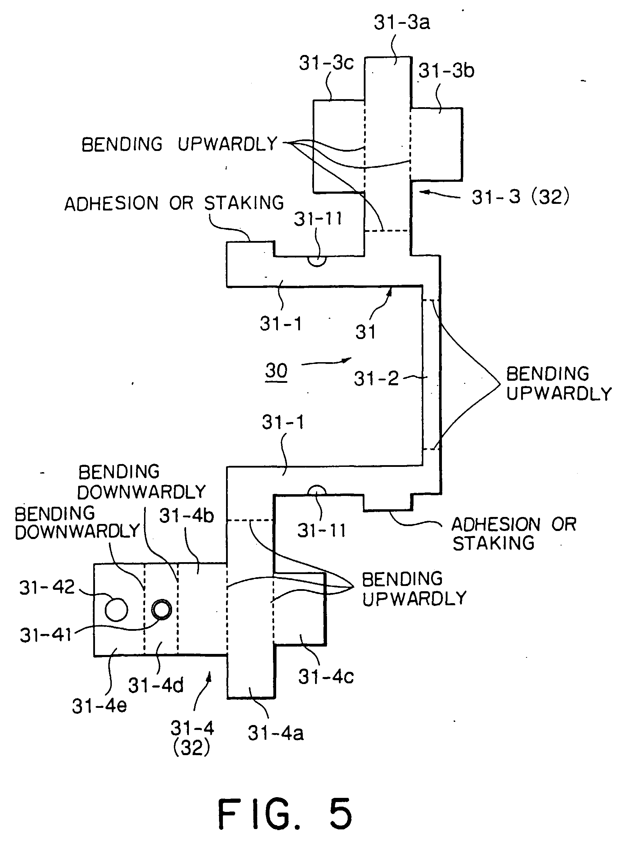

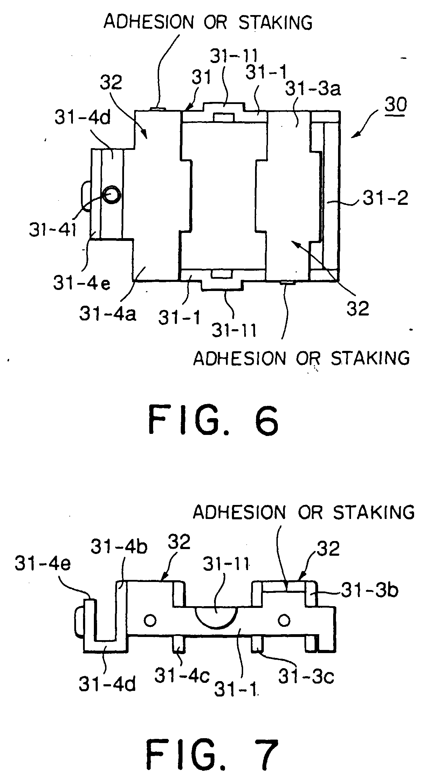

A manufacturing method for an actuator base will be described according to a preferred embodiment of the present invention with reference to Figs. 5 to 7. Figs. 6 and 7 are a plan view and a side view of an actuator base obtained according to the present invention, respectively. The actuator base obtained according to the present invention can be applied to the optical pickup shown in Fig. 1.

An actuator base 30 is formed of a magnetic and metallic plate and comprises an elongated rectangular frame portion 31. The actuator base 30 also comprises a pair of yoke portions 32 disposed between longitudinal sides 31-1 opposing each other in the frame portion 31 and at the positions corresponding to both sides of the lens holder (shown in Fig. 1 as numeral 3). Each yoke portion 32 is used to hold a permanent magnet and has an inverted U-shape. Each yoke portion 32 exists so as to be disposed between the longitudinal sides 31-1 which are opposing each other.

The manufacturing method according to the embodiment has a feature that the frame portion 31 and a pair of yoke portions 32 can be unitarily or integrally formed by punching of one metallic plate. For such the purpose, the method has a feature that punching is performed based on a development in which the pair of yoke portions are distant from each other. An example of developments of the actuator base 30 is shown in Fig. 5.

In the actuator base 30 shown in Fig. 5, two longitudinal sides 31-1 for forming the frame portion 31 are connected together by a front-end portion 31-2 in the direction opposite to the damper base (shown in Fig. 1 as numeral 4). From a portion of one of longitudinal sides 31-1 closer to the front-end portion 31-2, a block 31-3 for forming one of the pair of yoke portions 32 is extending in the perpendicular direction. The block 31-3 comprises plate portions 31-3a, 31-3b, and 31-3c. The plate portion 31-3a forms a ceiling portion of the inverted U-shape portion. The plate portion 31-3b is to be the back yoke while the plate portion 31-3c is to be the opposing yoke. From a portion of the other of longitudinal sides 31-1 closer to the rear-end portion, a block 31-4 forming the other of the pair of yoke portions 32 is extending in the perpendicular direction.

The block 31-4 comprises plate portions 31-4a, 31-4b, 31-4c, 31-4d, and 31-4e. The plate portion 31-4a forms a ceiling portion of the inverted U-shape portion. The plate portion 31-4b is to be the back yoke while the plate portion 31-4c is to be the opposing yoke. The plate portions 31-4d and 31-4e form an approximate U-shaped portion along with the plate portion 31-4b so as to secure a space for holding the damper base. In the plate portion 31-4d, a hole 31-41 for inserting a screw is formed. In the plate portion 31-4e, a hole 31-42 for inserting a screw is formed by drawing.

Approximately semi-circular protrusions 31-11 corresponding to the approximately semi-circular protrusions 5-2 described in Fig. 1 are formed by drawing in the two longitudinal sides 31-1, respectively. The plate portions of the blocks 31-3 and 31-4 for forming the yoke portions 32 have the same thickness.

Press-bending is performed on the punched piece after punching shown in Fig. 5. In Fig. 5, the portion indicated as "BENDING UPWARDLY" on a dashed line means that bending is to be performed at about 90° upwardly viewing the drawing. In this case, after bending the plate portions 31-3b and 31-3c at 90° upwardly, the plate portion 31-3a is bent at 90° upwardly. On the other hand, the plate portion 31-4d is bent at 90° downwardly relative to the plate portion 31-4b and further the plate portion 31-4e is bent at 90° downwardly relative to the plate portion 31-4d. Then after bending of the plate portions 31-4b and 31-4c at 90° upwardly, the plate portion 31-4a is bent at 90° upwardly. Furthermore, the portions of two longitudinal sides 31-1 at the both ends of the front-end portion 31-2 are respectively bent at 90° upwardly. Consequently, the shape shown in Fig. 6 can be obtained. The portions butting each other in consequence of the above-mentioned bending may be preferably reinforced by adhesion or staking. Such the portions are indicated as "ADHESION OR STAKING" in Figs. 5 to 7.

As understood by the above description, in the manufacturing method according to the present invention, blocks for forming a pair of yoke portions can be punched based on a development in which these blocks are distant from each other. Consequently, even when the pair of yoke portions are located close to each other after bending, the actuator base can be manufactured without reducing the thickness of the opposing yoke. Thereby magnetic flux leakage can be eliminated and a high-degree of acceleration can be obtained during driving of the lens holder.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

An actuator base comprises an elongated rectangular frame portion. In the actuator base, a pair of yoke portions are formed to exit between longitudinal sides of the frame portion opposing each other. The forming of the actuator base is performed by punching the frame portion and the pair of yoke portions unitarily from one metallic plate. The punching is performed based on a development in which the pair of yoke portions are distant from each other in advance.

## Claims

1. A method for manufacturing an actuator base for an optical pickup, the actuator base being formed of a magnetic and metallic material and comprising an inverted U-shaped pair of yoke portions for holding permanent magnets at positions corresponding to both sides of a lens holder of the optical pickup, said method comprising:
punching a frame portion and a pair of yoke portions unitarily from a metallic plate, whereby to provide an elongated rectangular frame portion as the actuator base, the pair of yoke portions being disposed between longitudinal sides of the frame portion and opposing each other in the frame portion;
wherein said step of punching the frame portion and the pair of yoke portions is performed based on a development in which the pair of yoke portions are remote from each other.

2. A method according to claim 1, wherein said step of punching the frame portion and the pair of yoke portions comprises equalizing the thickness of the inverted U-shaped portions in the pair of yoke portions.

3. A metallic plate punched to form unitarily a frame portion and a pair of yoke portions of an optical base for an optical pickup, the metallic plate after punching and before bending into usable form having two parallel frame segments connected by a connecting segment, a yoke segment extending from each frame segment in a direction generally normal to the respective frame segment, the two yoke segments extending in opposite directions from each other, each yoke segment having an arm extending generally normal to the frame segments, each arm having a pair of flaps, each flap extending from an opposite side of the arm;
wherein the metallic plate is configured by the punching such that when the metallic plate is bent into usable form, with a portion of the arms of the two yoke segments being brought into a coplanar relation, the distance between the arms of the two yoke segments is less than the aggregate length of their adjacent respective flaps.

4. A metallic plate as in claim 3, wherein portions of the plate forming the two yoke segments have the same thickness.

5. A method for manufacturing an actuator base for an optical pickup, the the method comprising the steps of:
punching the metallic plate of claim 3 or 4; and,
bending the metallic plate into the usable form.
